# EUROPÄISCHE PATENTSCHRIFT

(11) **EP 2 177 274 B1**
(45) Veröffentlichungstag und Bekanntmachung des Hinweises auf die Patenterteilung: **27.06.2012**
(21) Anmeldenummer: 09010848.1
(22) Anmeldetag: 25.08.2009
(51) Int. Cl.: B05B 9/08, F04B 53/14, F04B 53/22, B05B 9/04

(54) **Spritzgerät**
Spraying device
Appareil de pulvérisation

(30) Priorität: 20.10.2008 DE 102008052147
(43) Veröffentlichungstag der Anmeldung: 21.04.2010
(73) Patentinhaber: SOLO Kleinmotoren GmbH, 71050 Sindelfingen (DE)
(72) Erfinder: Strauss, Willi, 71101 Schönaich (DE); Betz, Michael, 71732 Tamm (DE)
(74) Vertreter: Dreiss

(56) Entgegenhaltungen:
- EP-A1- 1 426 584
- CH-A- 120 060
- CH-A- 142 248
- DE-U1- 8 306 095

## Beschreibung

Die Erfindung betrifft ein aus der DE 83 06 095 U1 bekanntes Spritzgerät mit einem Vorratsbehälter für eine Flüssigkeit, insbesondere für ein Pflanzenschutzmittel, mit einer Pumpeinrichtung zur Druckbeaufschlagung der Flüssigkeit, wobei die Pumpeinrichtung einen Pumpenantrieb umfasst, der mittels eines Pumpenpleuels mit einem Pumpenkolben bewegungsgekoppelt ist.

Spritzgeräte werden beispielsweise zur Gartenpflege oder im Landwirtschaftsbetrieb eingesetzt. Um einen homogenen Austrag eines Pflanzenschutzmittels zu ermöglichen, sind üblicherweise Pumpeinrichtungen vorgesehen, mit denen das Pflanzenschutzmittel mit Druck beaufschlagt werden kann. Das druckbeaufschlagte Pflanzenschutzmittel kann dann aus dem Vorratsbehälter abgeführt werden, beispielsweise unter Verwendung einer Düsen- oder Zerstäubereinrichtung.

Für eine Druckbeaufschlagung eines Pflanzenschutzmittels haben sich als Kolbenpumpen ausgebildete Pumpeinrichtungen bewährt. Diese weisen einen Pumpenantrieb auf, dessen Bewegung mittels eines Pumpenpleuels auf einen Pumpenkolben übertragen wird.

Spritzgeräte können starken Belastungen ausgesetzt sein, beispielsweise Stoßbelastungen beim Transport oder beim Abstellen des Spritzgeräts. Spritzgeräte sollen außerdem auch bei minimaler Pflege und längeren Phasen des Nichtgebrauchs zuverlässig funktionieren. Schließlich sollen Spritzgeräte preisgünstig herstellbar sein, insbesondere wenn ein Spritzgerät auch für den privaten Gebrauch vorgesehen ist.

Hiervon ausgehend liegt der vorliegenden Erfindung die Aufgabe zugrunde, ein Spritzgerät der eingangs genannten Art zu schaffen, welches einfach herstellbar ist und einen zuverlässigen Betrieb auch bei einer unsanften Handhabung gewährleistet.

Diese Aufgabe wird bei einem Spritzgerät der eingangs genannten Art dadurch gelöst, dass das Pumpenpleuel ein erstes Pleuelteil und ein zweites Pleuelteil aufweist, wobei zur Verbindung des ersten Pleuelteils und des zweiten Pleuelteils mindestens eine Verbindungseinrichtung vorgesehen ist, mittels welcher die Pleuelteile in mindestens zwei unterschiedlichen Rastebenen miteinander verrastbar sind.

Dadurch, dass das Pumpenpleuel miteinander verrastbare Pleuelteile aufweist, lässt es sich besonders einfach montieren. Insbesondere lässt sich gleichzeitig mit der Verrastung der Pleuelteile eine Verbindung zum Pumpenantrieb und/oder zum Pumpenkolben herstellen.

Dadurch, dass eine Verbindungseinrichtung vorgesehen ist, mittels welcher die Pleuelteile in mindestens zwei unterschiedlichen Rastebenen miteinander verrastbar sind, kann eine besonders zuverlässige, stoßunempfindliche Verbindung zwischen den Pleuelteilen hergestellt werden. Hierdurch wird ein unbeabsichtigtes Lösen der Pleuelteile voneinander verhindert. Auf diese Weise wird auch ein Lösen des Pleuelteils von dem Pumpenantrieb und/oder dem Pumpenkolben verhindert.

Besonders vorteilhaft ist es, wenn die Rastebenen zueinander winklig, insbesondere senkrecht oder im Wesentlichen senkrecht, sind. Auf diese Weise kann ein Lösen der Pleuelteile voneinander in zueinander winkligen Richtungen verhindert werden. Hierdurch kann einem Lösen der Pleuelteile voneinander auch bei höchsten Stoßbelastungen vorgebeugt werden.

Nach einer Ausführungsform der Erfindung ist vorgesehen, dass die Verbindungseinrichtung ein einer ersten Rastebene zugeordnetes erstes Rastelement und ein einer zweiten Rastebene zugeordnetes zweites Rastelement aufweist. Hierdurch steht für eine Verrastung in jeweils einer Ebene jeweils mindestens ein Rastelement zur Verfügung.

In vorteilhafter Weise sind das erste Rastelement und das zweite Rastelement an demselben Pleuelteil, insbesondere an dem ersten Pleuelteil, angeordnet. Insbesondere sind das erste Rastelement und das zweite Rastelement einstückig mit dem ersten Pleuelteil ausgebildet. Auf diese Weise kann eine besonders einfach aufgebaute Verbindungseinrichtung geschaffen werden.

Besonders bevorzugt ist es ferner, wenn die Verbindungseinrichtung eine der ersten Rastebene zugeordnete Rastfläche und eine der zweiten Rastebene zugeordnete Rastfläche aufweist. Auf diese Weise kann für jede der Rastebenen mindestens eine Rastfläche zur Verfügung gestellt werden, so dass diese voneinander unabhängig gestaltet werden können.

Vorzugsweise sind die erste Rastfläche und die zweite Rastfläche an demselben Pleuelteil, insbesondere an dem zweiten Pleuelteil, angeordnet. Insbesondere sind die erste Rastfläche und die zweite Rastfläche einstückig mit dem zweiten Pleuelteil ausgebildet. Auf diese Weise kann eine besonders einfach aufgebaute Verbindungseinrichtung bereitgestellt werden.

Bei einer besonders bevorzugten Ausführungsform der Erfindung ist vorgesehen, dass die Pleuelteile in einer Fügerichtung miteinander fügbar sind und dass die Fügerichtung zu einer der Rastebenen senkrecht oder im Wesentlichen senkrecht ist. Dies ermöglicht eine besonders einfache Verbindung der Pleuelteile miteinander. Gleichzeitig wird ein besonders guter Schutz gegen ein Lösen der Pleuelteile voneinander in einer zur Fügerichtung entgegengesetzten Richtung geschaffen.

Ein besonders einfacher Aufbau der Verbindungseinrichtung ergibt sich, wenn das erste Rastelement und das zweite Rastelement an einem gemeinsamen Rastelementhalter angeordnet sind. Dieser ist insbesondere einstückig mit einem der Pleuelteile ausgebildet.

Besonders bevorzugt ist es, wenn das erste Rastelement und das zweite Rastelement in unterschiedlichen Richtung von dem Rastelementhalter abragen. Dies ermöglicht eine besonders einfache Realisierung einer Verrastung der Pleuelteile in voneinander verschiedenen Rastebenen.

Wenn sich der Rastelementhalter zumindest im Wesentlichen parallel zu einer Fügerichtung erstreckt, in welcher die Pleuelteile miteinander fügbar sind, vereinfacht sich der Fügevorgang zur Verbindung der Pleuelteile miteinander. Vorzugsweise ist der Rastelementhalter in einer zu der ersten Rastebene parallelen Richtung verformbar, insbesondere biegbar. Auf diese Weise kann ein der ersten Rastebene zugeordnetes Rastelement durch Verformung des Rastelementhalters verrastet werden. Dies ermöglicht eine besonders stabile Ausführung des ersten Rastelements.

Weiterhin ist es bevorzugt, wenn das zweite Rastelement in einer zu der Rastebene parallelen Richtung verformbar, insbesondere biegbar ist. Auf diese Weise kann einer Verformung des Rastelementhalters eine Verformung des zweiten Rastelements überlagert werden, so dass eine Verrastung in unterschiedlichen Rastebenen, und insbesondere in zueinander winkligen Rastebenen, unterstützt wird.

Vorzugsweise ist zur Verformung des zweiten Rastelements an dem zweiten Pleuelteil eine Anlauffläche vorgesehen, welche zu einer Fügerichtung, in welcher die Pleuelteile miteinander fügbar sind, geneigt ist. Hierdurch ist es möglich, die Pleuelteile in nur einer Fügerichtung miteinander zu fügen und hierbei nicht nur das Rastelement mit einer ersten Rastfläche zu verrasten, sondern während des Fügevorgangs auch das zweiten Rastelement so zu verformen, dass unter Beibehaltung der Fügerichtung auch das zweite Rastelement mit einer zweiten Rastfläche verrastet werden kann.

Insbesondere ist es bevorzugt, wenn die Anlauffläche benachbart zu einer der zweiten Rastebene zugeordneten zweiten Rastfläche angeordnet ist. Hierdurch kann der Aufbau der Verbindungseinrichtung weiter vereinfacht werden.

Besonders bevorzugt ist es, wenn in einem miteinander gefügten Zustand der Pleuelteile in einer ersten Rastebene ein erstes Rastelement mit einer ersten Rastfläche und in einer zweiten Rastebene ein zweites Rastelement mit einer zweiten Rastfläche verrastet ist, wobei die Verrastung zwischen dem zweiten Rastelement und der zweiten Rastfläche als Sicherungseinrichtung gegen ein Lösen des ersten Rastelements von der ersten Rastfläche wirksam ist. Die Verrastung in der zweiten Rastebene verhindert also ein Lösen der Verrastung in der ersten Rastebene. Ein Lösen der Pleuelteile voneinander ist dann nur durch sukzessives Auflösen der Verbindung zwischen dem zweiten Rastelement und der zweiten Rastfläche und einem anschließenden Lösen der Verbindung zwischen dem ersten Rastelement und der ersten Rastfläche möglich. Da die Verrastungen aber in unterschiedlichen Rastebenen wirksam sind, kann auf diese Weise ein unbeabsichtigtes Lösen der Pleuelteile voneinander verhindert werden.

Die Erfindung betrifft ferner ein Pumpenpleuel für eine Pumpeinrichtung, mit einem ersten Pleuelteil und einem zweiten Pleuelteil, wobei zur Verbindung des ersten Pleuelteils und des zweiten Pleuelteils mindestens eine Verbindungseinrichtung vorgesehen ist, mittels welcher die Pleuelteile in mindestens zwei unterschiedlichen Rastebenen miteinander verrastbar sind. Vorteile und Ausgestaltungen des erfindungsgemäßen Pumpenpleuels sind bereits vorstehend im Zusammenhang mit den Vorteilen und Ausgestaltungen des erfindungsgemäßen Spritzgeräts erläutert worden.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Figur 1: eine perspektivische Ansicht einer Ausführungsform eines Spritzgeräts;
- Figur 2: eine Explosionsdarstellung einer Pumpeinrichtung für ein Spritzgerät gemäß Figur 1;
- Figur 3: eine perspektivische Ansicht eines Pumpenpleuels der Pumpeinrichtung gemäß Figur 2, wobei das Pumpenpleuel in einem ungefügten Zustand eines ersten Pleuelteils und eines zweiten Pleuelteils dargestellt ist;
- Figur 4: eine perspektivische Ansicht des Pumpenpleuels gemäß Figur 3 in einem miteinander gefügten Zustand der Pleuelteile;
- Figur 5: eine der Figur 4 entsprechende Darstellung in einem Längsschnitt; und
- Figur 6: einen Längsschnitt des Pumpenpleuels gemäß Figur 3 während des Fügens der Pleuelteile.

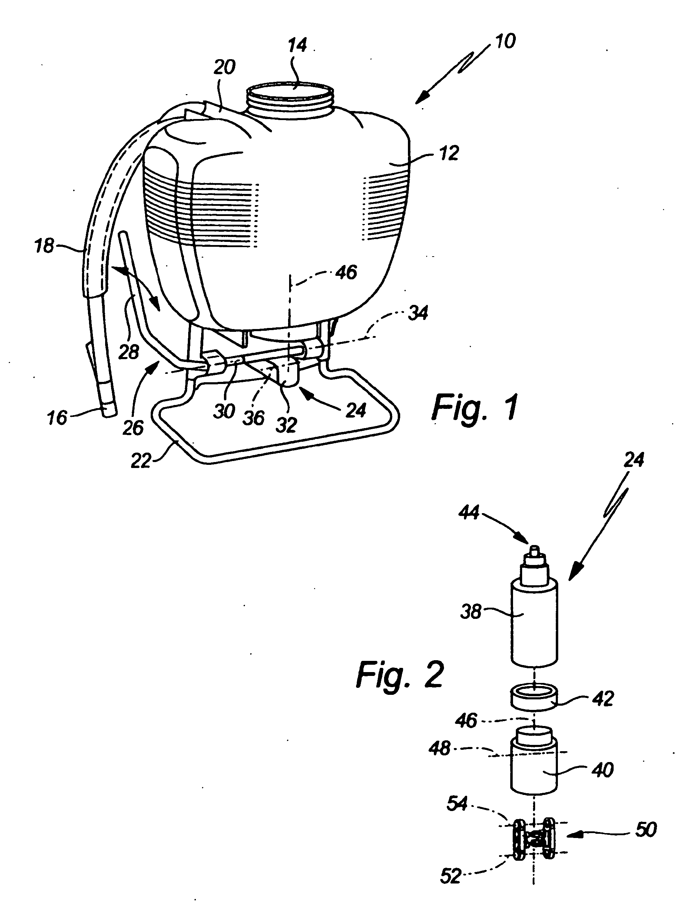

Eine Ausführungsform eines mit dem Bezugszeichen 10 bezeichneten Spritzgeräts ist in der Figur 1 dargestellt. Das Spritzgerät 10 weist einen Vorratsbehälter 12 zur Bevorratung einer Flüssigkeit, insbesondere eines Pflanzenschutzmittels, auf. Die Flüssigkeit wird über eine an dem Vorratsbehälter 12 ausgebildete Öffnung 14 in den Vorratsbehälter 12 eingefüllt. Die Öffnung 14 ist mit Hilfe eines in der Zeichnung nicht dargestellten Deckelteils verschließbar.

Zum Austrag der Flüssigkeit weist das Spritzgerät 10 eine Düse 16 auf, welche über eine insbesondere als Schlauch ausgebildete Leitung 18 mit dem Vorratsbehälter 12 verbunden ist.

Das Spritzgerät 10 ist insbesondere in Form eines Rückenspritzgeräts ausgebildet. Ein solches Gerät weist vorzugsweise mindestens einen Trageriemen 20 auf.

Um das Spritzgerät 10 sicher aufstellen zu können und um ein komfortables Befüllen des Vorratsbehälters 12 zu ermöglichen, weist das Spritzgerät 10 ein Gestell 22 auf, mittels welchem das Spritzgerät 10 auf eine Aufstellfläche aufgestellt werden kann.

Zur Druckbeaufschlagung einer in dem Vorratsbehälter 12 enthaltenen Flüssigkeit umfasst das Spritzgerät 10 eine Pumpeinrichtung 24. Die Bestandteile der Pumpeinrichtung 24 sind aus Gründen der übersichtlichkeit zum Teil in Figur 1 und zum Teil in Figur 2 dargestellt. Die Pumpeinrichtung 24 umfasst einen Pumpenantrieb 26. Bei dem dargestellten Ausführungsbeispiel ist ein Pumpenantrieb 26 in Form eines manuellen Antriebs vorgesehen. Dieser umfasst einen handbetätigbaren Pumphebel 28, eine mit dem Pumphebel 28 verbundene Pumpwelle 30 sowie ein mit der Pumpwelle 30 verbundenes Kurbelelement 32. Durch Schwenkbewegung des Pumphebels 28 in in Figur 1 mit 34 bezeichneten Schwenkrichtungen wird die Pumpwelle 30 und das mit der Pumpwelle verbundene Kurbelelement 32 um eine Wellenachse 34 verschwenkt. Hierdurch wird auch eine parallel zu der Wellenachse 34 verlaufende Kurbelelementachse 36 um die Wellenachse 34 herum verschwenkt.

Es versteht sich, dass anstelle eines manuellen Pumpenantriebs 26 auch ein motorischer Pumpenantrieb vorgesehen sein kann. Dieser kann beispielsweise anstelle des Pumphebels 28 einen Motor, insbesondere einen Elektromotor, aufweisen, und anstelle der Pumpwelle 30 und des Kurbelelements 32 eine Kurbelwelle.

Neben dem Pumpenantrieb 26 umfasst die Pumpeinrichtung 24 weitere, in Figur 2 dargestellte Bauteile. Im Einzelnen umfasst die Pumpeinrichtung 24 einen Zylinder 38 sowie einen in diesem längsverschieblich gelagerten Pumpenkolben 40. Der Pumpenkolben 40 ist mit Hilfe einer Kolbendichtung 42 relativ zu dem Zylinder 38 abgedichtet. Auf der dem Kolben 40 abgewandten Seite des Zylinders 38 ist ein Pumpenventil 44 angeordnet. Der Zylinder 38 und der Kolben 40 sind entlang einer Pumpenachse 46 angeordnet, welche zu der Wellenachse 34 senkrecht und zu dieser versetzt verläuft. Der Pumpenkolben 40 weist eine Kolbenachse 48 auf, welche sich senkrecht zu der Pumpenachse 46 erstreckt und welche vorzugsweise parallel zu der Kurbelwellenachse 36 verläuft.

Zur Bewegungskopplung der Kurbelelementachse 36 des Kurbelelements 32 und der Kolbenachse 48 des Pumpenkolbens 40 umfasst die Pumpeinrichtung 24 ein Pumpenpleuel 50. Das Pumpenpleuel 50 weist eine erste Lagerachse 52 auf und eine hierzu vorzugsweise parallele zweite Lagerachse 54. Im montierten Zustand der Pumpeinrichtung 24 ist die erste Lagerachse 52 kollinear mit der Kurbelelementachse 36, so dass das Kurbelelement 32 und das Pumpenpleuel 50 drehbeweglich miteinander verbunden sind. Ferner ist im montierten Zustand der Pumpeinrichtung 24 die zweite Lagerachse 54 kollinear mit der Kolbenachse 48, so dass das Pumpenpleuel 50 und der Pumpenkolben 40 drehbeweglich miteinander verbunden sind. Auf diese Weise kann eine Schwenkbewegung des Pumphebels 28 in eine geradlinige Bewegung des Pumpenkolbens 40 entlang der Pumpenachse 46 übertragen werden. Hierbei ist das Pumpenventil 44 während eines Verdichtungshubs geöffnet und während eines Rückhubs geschlossen, so dass die in dem Vorratsbehälter 12 enthaltene Flüssigkeit mit Druck beaufschlagt werden kann.

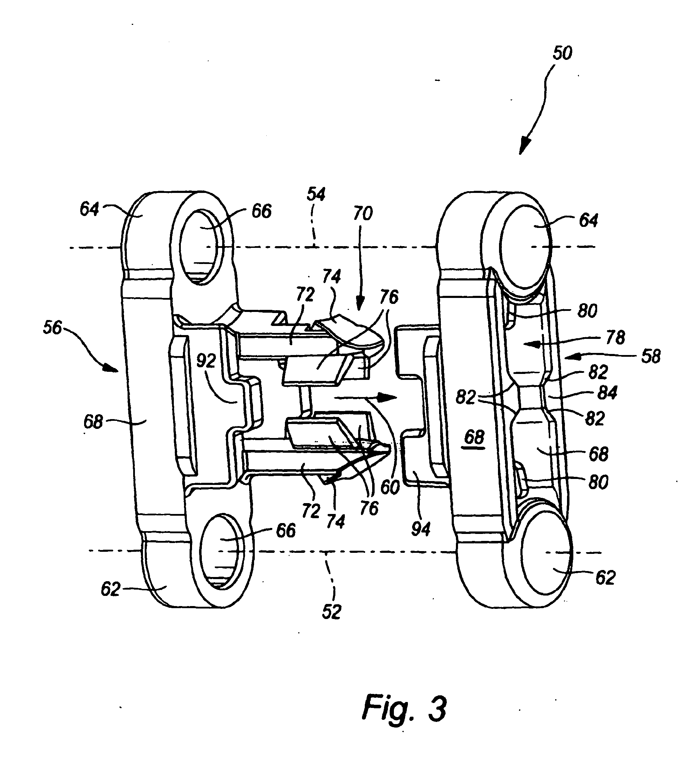

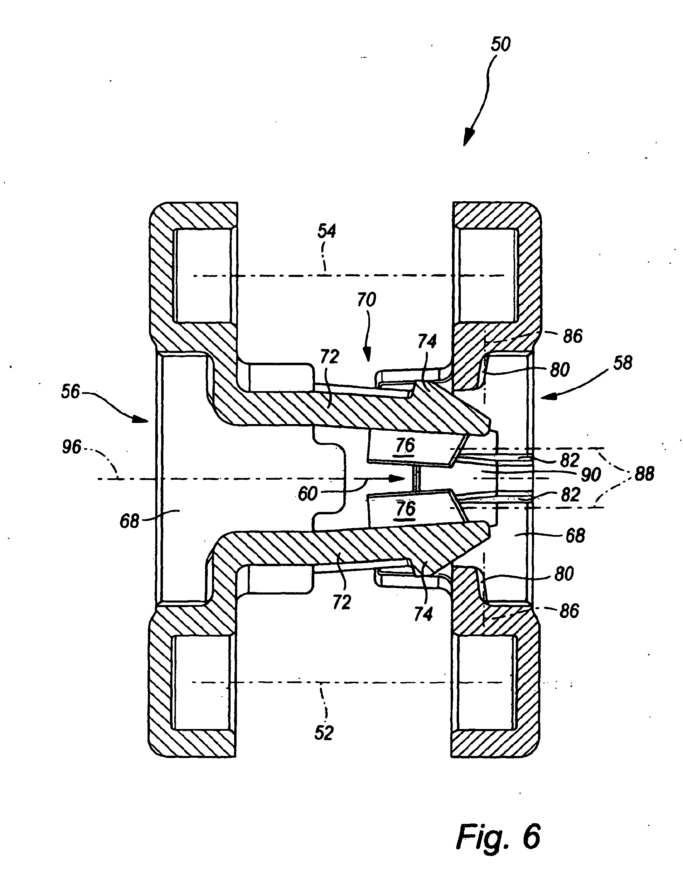

Das Pumpenpleuel 50 wird im Folgenden unter Bezug auf die Figuren 3 bis 6 detaillierter beschrieben. Das Pumpenpleuel 50 weist ein erstes Pleuelteil 56 sowie ein zweites Pleuelteil 58 auf. Die Pleuelteile 56 und 58 sind in einer mit 60 bezeichneten Fügerichtung (vgl. Figuren 3 und 6) miteinander fügbar und aus Kunststoff hergestellt.

Die Pleuelteile 56 und 58 weisen jeweils einen ersten Lagerabschnitt 62 und einen zweiten Lagerabschnitt 64 auf. Die Lagerabschnitte 62 definieren die erste Lagerachse 52; die Lagerabschnitte 64 definieren die zweite Lagerachse 54. Beispielsweise umfassen die Lagerabschnitte 62, 64 Lagerbuchsen 66, welche mit entsprechenden Lagerbolzen zusammenwirken, welche zum einen an der Kurbelelementachse 36 des Kurbelelements 32 vorgesehen sind und zum anderen an der Kolbenachse 48 des Pumpenkolbens 40.

Die Lagerabschnitte 62, 64 sind jeweils mit Hilfe von stegförmigen Pleuelabschnitten 68 miteinander verbunden.

Zur Verbindung der Pleuelteile 56 und 58 miteinander umfasst das Pumpenpleuel 50 eine Verbindungseinrichtung 70.

Das erste Pleuelteil 56 weist mindestens ein, vorzugsweise zwei Rastelementhalter 72 auf. Die Rastelementhalter 72 erstrecken sich in einer zu der Fügerichtung 60 parallelen Richtung. Die Rastelementhalter 72 weisen in Richtung auf das zweite Pleuelteil 58. An dem freien Endes eines Rastelementhalters 72 oder hierzu benachbart ist mindestens ein erstes Rastelement 74 und mindestens ein zweites Rastelement 76 angeordnet. Beispielsweise sind an einem Rastelementhalter 72 ein erstes Rastelement 74 und zwei zweite Rastelemente 76 vorgesehen. Die Rastelemente 74 und 76 erstrecken sich ausgehend von dem Rastelementhalter 72 in unterschiedlichen Richtungen.

Vorzugsweise ist das erste Rastelement 74 in Form einer formstabilen Rastnase ausgebildet. Vorzugsweise ist das mindestens eine zweite Rastelement 76 in Form einer Rastzunge ausgebildet, welche eine geringere Formstabilität aufweist als das erste Rastelement 74.

Die Pleuelabschnitte 68 des zweiten Pleuelteils 58 begrenzen eine Pleuelteilöffnung 78, in welche die Rastelemente 74, 76 einführbar sind. Die Begrenzung der Pleuelteilöffnung 78 umfasst mindestens eine erste Rastfläche 80, welche sich senkrecht oder im Wesentlichen senkrecht zu der Fügerichtung 60 erstreckt. Ferner ist die Pleuelteilöffnung 78 durch mindestens eine zweite Rastfläche 82 begrenzt, welche sich parallel oder im Wesentlichen parallel zu der Fügerichtung 60 erstreckt. Die Rastflächen 82 sind an einem Materialvorsprung 84 vorgesehen, welcher sich ausgehend von einem Pleuelabschnitt 68 nach innen in Richtung auf einen gegenüberliegenden Pleuelabschnitt 68 desselben Pleuelteils erstreckt.

In einem verrasteten Zustand der Pleuelteile 56 und 58 wirken die ersten Rastelemente 74 mit den ersten Rastflächen 80 zusammen. Ferner wirken im verrasteten Zustand der Pleuelteile 56 und 58 die zweiten Rastelemente 76 mit den zweiten Rastflächen 82.zusammen.

Die ersten Rastflächen 80 definieren hierbei jeweils eine erste Rastebene 86. Die erste Rastebene 86 erstreckt sich senkrecht oder im Wesentlichen senkrecht zur Fügerichtung 60.

Die zweiten Rastflächen 82 erstrecken sich jeweils in einer zweiten Rastebene 88. Die Rastebenen 86 und 88 sind zueinander winklig, insbesondere zueinander senkrecht.

Während des Fügens des ersten Pleuelteils 56 mit dem zweiten Pleuelteil 58 werden die Rastelementhalter 72 in einer zu der ersten Rastebene 86 parallelen Richtung verformt, so dass die ersten Rastelemente 74 in rastenden Eingriff mit den ersten Rastflächen 80 gelangen können. Während der besonders gut aus Figur 6 ersichtlichen Verformung der Rastelementhalter 72 werden auch die zweiten Rastelemente 76 aus ihrer unverformten Lage (vgl. Figur 3) in eine verformte Lage (vgl. Figur 6) überführt. Hierfür ist eine sich bezogen auf die Fügerichtung 60 winklig erstreckende Anlauffläche 90 vorgesehen. Mit Hilfe der Anlauffläche 90 werden die zweiten Rastelemente 76 während der Überführung der ersten Rastelemente 74 aus ihrem unverrasteten in ihren verrasteten Zustand in einer zu der ersten Rastebene 80 parallelen Richtung verformt, so dass die zweiten Rastelemente 76 zunächst außer Eingriff mit den zweiten Rastflächen 82 stehen. Sobald die Rastelementhalter 72 so weit in die Öffnung 78 eingeführt sind, dass sich diese federelastisch zurückverformen und die ersten Rastelemente 74 in Eingriff mit den ersten Rastflächen 80 geraten, verformen sich die zweiten Rastelemente 76 ebenfalls federelastisch und geraten in rastenden Eingriff mit den zweiten Rastflächen 82.

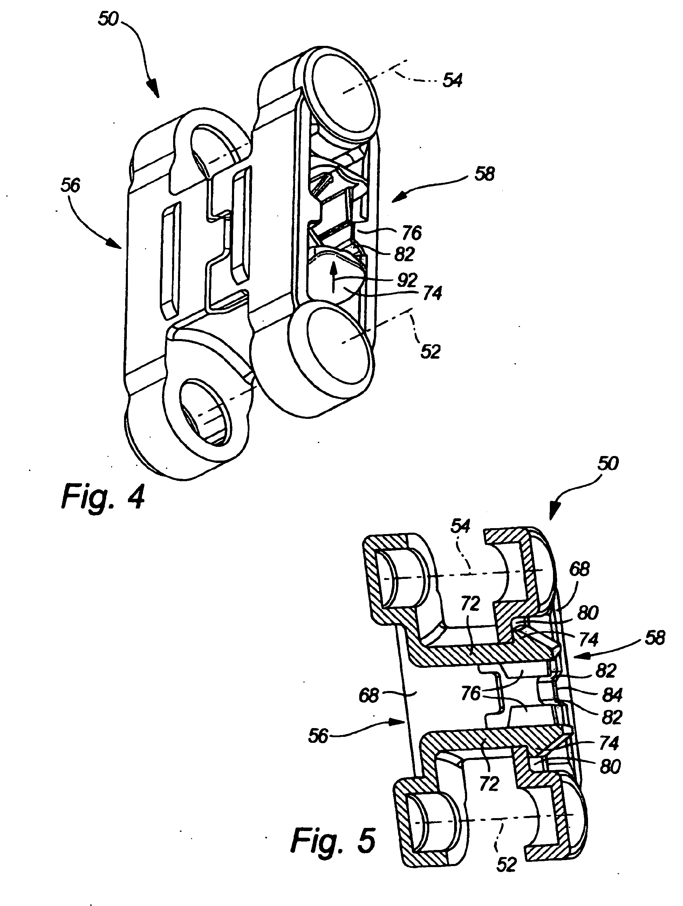

Um die Pleuelteile 56 und 58 wieder voneinander lösen zu können, müssten die ersten Rastelemente 74 in einer in Figur 4 mit dem Bezugszeichen 92 bezeichneten Löserichtung bewegt werden. In dieser Richtung ist eine Bewegung der ersten Rastelemente 74 jedoch blockiert, da die zweiten Rastelemente 76 in rastendem Eingriff mit den zweiten Rastflächen 82 stehen. Auf diese Weise wirkt die Verrastung des zweiten Rastelements 76 mit der zweiten Rastfläche 82 als Sicherungseinrichtung gegen ein Lösen des ersten Rastelements 74 von der ersten Rastfläche 80.

Mit Hilfe der Verbindungseinrichtung 70 kann in einfacher Weise eine zuverlässige Verbindung zwischen den Pleuelteilen 56, 58 hergestellt werden. Gleichzeitig kann durch Einschluss von Lagerbolzen des Kurbelelements 32 bzw. des Pumpenkolbens 40 eine Drehverbindung mit dem Kurbelelement 32 bzw. mit dem Pumpenkolben 40 hergestellt werden.

Zur weiteren Verbesserung der Stabilität der Verbindung zwischen den Pleuelteilen 56 und 58 können Formschlusselemente 92 bzw. 94 vorgesehen sein, welche in einem verrasteten Zustand der Pleuelteile 56, 58 miteinander formschlüssig in Eingriff stehen.

Das vorstehend beschriebene Pumpenpleuel 50 weist zwei Symmetrieebenen auf. Eine erste Symmetrieebene wird durch die beiden Lagerachsen 52 und 54 aufgespannt, eine zweite Symmetrieebene verläuft hierzu senkrecht und parallel zu der Fügerichtung 60. Diese zweite Symmetrieebene ist in der Figur 6 mit dem Bezugszeichen 96 bezeichnet.

## Patentansprüche

1. Spritzgerät (10) mit einem Vorratsbehälter (12) für eine Flüssigkeit, mit einer Pumpeinrichtung (24) zur Druckbeaufschlagung der Flüssigkeit, wobei die Pumpeinrichtung (24) einen Pumpenantrieb (26) umfasst, der mittels eines Pumpenpleuels (50) mit einem Pumpenkolben (40) bewegungsgekoppelt ist, **dadurch gekennzeichnet, dass** das Pumpenpleuel ein erstes Pleuelteil (56) und ein zweites Pleuelteil (58) aufweist, wobei zur Verbindung des ersten Pleuelteils (56) und des zweiten Pleuelteils (58) mindestens eine Verbindungseinrichtung (70) vorgesehen ist, mittels welcher die Pleuelteile (56, 58) in mindestens zwei unterschiedlichen Rastebenen (86, 88) miteinander verrastbar sind.

2. Spritzgerät (10) nach Anspruch 1, **dadurch gekennzeichnet, dass** die Rastebenen (86, 88) zueinander winklig sind.

3. Spritzgerät (10) nach Anspruch 1 oder 2, **dadurch gekennzeichnet, dass** die Verbindungseinrichtung (70) ein einer ersten Rastebene (86) zugeordnetes erstes Rastelement (74) und ein einer zweiten Rastebene (88) zugeordnetes zweites Rastelement (76) aufweist.

4. Spritzgerät (10) nach Anspruch 3, **dadurch gekennzeichnet, dass** das erste Rastelement (74) und das zweite Rastelement (76) an dem ersten Pleuelteil (56) angeordnet sind.

5. Spritzgerät (10) nach einem der voranstehenden Ansprüche, **dadurch gekennzeichnet, dass** die Verbindungseinrichtung (70) eine der ersten Rastebene (86) zugeordnete erste Rastfläche (80) und eine der zweiten Rastebene (88) zugeordnete zweite Rastfläche (82) aufweist.

6. Spritzgerät (10) nach Anspruch 5, **dadurch gekennzeichnet, dass** die erste Rastfläche (80) und die zweite Rastfläche (82) an dem zweiten Pleuelteil (58) angeordnet sind.

7. Spritzgerät (10) nach einem der voranstehenden Ansprüche, **dadurch gekennzeichnet, dass** die Pleuelteile (56, 58) in einer Fügerichtung (60) miteinander fügbar sind und dass die Fügerichtung (60) zu einer der Rastebenen (86, 88) senkrecht ist.

8. Spritzgerät (10) nach einem der Ansprüche 3 bis 7, **dadurch gekennzeichnet, dass** das erste Rastelement (74) und das zweite Rastelement (76) an einem gemeinsamen Rastelementhalter (72) angeordnet sind.

9. Spritzgerät (10) nach Anspruch 8, **dadurch gekennzeichnet, dass** das erste Rastelement (74) und das zweite Rastelement (76) in unterschiedlichen Richtungen von dem Rastelementhalter (72) abragen.

10. Spritzgerät (10) nach Anspruch 8 oder 9, **dadurch gekennzeichnet, dass** sich der Rastelementhalter (72) parallel zu einer Fügerichtung (60) erstreckt, in welcher die Pleuelteile (56, 58) miteinander fügbar sind.

11. Spritzgerät (10) nach einem der Ansprüche 8 bis 10, **dadurch gekennzeichnet, dass** der Rastelementhalter (72) in einer zu der ersten Rastebene (86) parallelen Richtung verformbar ist.

12. Spritzgerät (10) nach einem der Ansprüche 3 bis 11, **dadurch gekennzeichnet, dass** das zweite Rastelement (76) in einer zu der ersten Rastebene (86) parallelen Richtung verformbar ist.

13. Spritzgerät (10) nach einem der Ansprüche 3 bis 12, **dadurch gekennzeichnet, dass** das zur Verformung des zweiten Rastelements (76) an dem zweiten Pleuelteil (58) eine Anlauffläche (90) vorgesehen ist, welche zu einer Fügerichtung (60), in welcher die Pleuelteile (56, 58) miteinander fügbar sind, geneigt ist.

14. Spritzgerät (10) nach Anspruch 13, **dadurch gekennzeichnet, dass** die Anlauffläche (90) benachbart zu einer der zweiten Rastebene (88) zugeordneten zweiten Rastfläche (82) angeordnet ist.

15. Spritzgerät (10) nach einem der voranstehenden Ansprüche, **dadurch gekennzeichnet, dass** in einem miteinander gefügten Zustand der Pleuelteile (56, 58) in einer ersten Rastebene (86) ein erstes Rastelement (74) mit einer ersten Rastfläche (80) und in einer zweiten Rastebene (88) ein zweites Rastelement (76) mit einer zweiten Rastfläche (82) verrastet ist, wobei die Verrastung zwischen dem zweiten Rastelement (76) und der zweiten Rastflächen (82) als Sicherungseinrichtung gegen ein Lösen des ersten Rastelements (74) von der ersten Rastfläche (80) wirksam ist.

16. Pumpenpleuel für eine Pumpeinrichtung (24), mit einem ersten Pleuelteil (56) und einem zweiten Pleuelteil (58), wobei zur Verbindung des ersten Pleuelteils (56) und des zweiten Pleuelteils (58) mindestens eine Verbindungseinrichtung (70) vorgesehen ist, mittels welcher die Pleuelteile (56, 58) in mindestens zwei unterschiedlichen Rastebenen (86, 88) miteinander verrastbar sind.

## Claims

1. A sprayer (10) with a reservoir (12) for a fluid, with a pump device (24) for pressurizing the fluid, whereby the pump device (24) comprises a pump drive (26), which is movably coupled by means of a pump connecting rod (50) to a pump piston (40), **characterized in that** the pump connecting rod has a first pump connecting rod part (56) and a second pump connecting rod part (58), whereby in order to connect the first connecting rod part (56) and the second connecting rod part (58), at least one connecting device (70) is provided, by means of which the connecting rod parts (56, 58) can latch together in at least two different latching planes (86, 88).

2. A sprayer (10) according to claim 1, **characterized in that** the latching planes (86, 88) are at an angle to each other.

3. A sprayer (10) according to claim 1 or 2, **characterized in that** the connecting device (70) has a first latching element (74) assigned to a first latching plane (86) and a second latching element (76) assigned to a second latching plane (88).

4. A sprayer (10) according to claim 3, **characterized in that** the first latching element (74) and the second latching element (76) are arranged on the first connecting rod part (56).

5. A sprayer (10) according to one of the previous claims, **characterized in that** the connecting device (70) features a first latching surface (80) that is assigned to the first latching plane (86) and a second latching surface (82) that is assigned to the second latching plane (88).

6. A sprayer (10) according to claim 5, **characterized in that** the first latching surface (80) and the second latching surface (82) are arranged on the second connecting rod part (58).

7. A sprayer (10) according to one of the previous claims, **characterized in that** the connecting rod parts (56, 58) can be joined in an assembly direction (60), and that the assembly direction (60) is vertical to one of the latching planes (86, 88).

8. A sprayer (10) according to one of the claims 3 to 7, **characterized in that** the first latching element (74) and the second latching element (76) are arranged on a common latching element bracket (72).

9. A sprayer (10) according to claim 8, **characterized in that** the first latching element (74) and the second latching element (76) project in different directions from the latching element bracket (72).

10. A sprayer (10) according to claim 8 or 9, **characterized in that** the latching element bracket (72) extends parallel to an assembly direction (60), in which the connecting rod parts (56, 58) can be joined.

11. A sprayer (10) according to one of the claims 8 to 10, **characterized in that** the latching element bracket (72) can be deformed in a direction parallel to the first latching plane (86).

12. A sprayer (10) according to one of the claims 3 to 11, **characterized in that** the second latching element (76) can be deformed in a direction that is parallel to the first latching plane (86).

13. A sprayer (10) according to one of the claims 3 to 12, **characterized in that** in order to deform the second latching element (76), a surface (90) is provided on the second connecting rod part (58), the surface (90) being inclined with respect to an assembly direction (60) in which the connecting rod parts (56, 58) can be joined.

14. A sprayer (10) according to claim 13, **characterized in that** the surface (90) is arranged adjacent to a second latching surface (82) that is assigned to the second latching plane (88).

15. A sprayer (10) according to one of the previous claims, **characterized in that**, when the connecting rod parts (56, 58) are joined, in a first latching plane (86), a first latching element (74) is latched with a first latching surface (80), and in a second latching plane (88), a second latching element (76) is latched with a second latching surface (82), whereby the latching of the second latching element (76) and the second latching surface (82) is effective as a safety mechanism against a disengagement of the first latching element (74) from the first latching plane (80).

16. A pump connecting rod for a pump device (24), with a first connecting rod part (56) and a second connecting rod part (58), whereby in order to connect the first connecting rod part (56) and the second connecting rod part (58), at least one connecting device (70) is provided, by means of which the connecting rod parts (56, 58) can latch together in at least two different latching planes (86, 88).

## Revendications

1. Pulvérisateur (10) comportant un réservoir (12) à liquide, un dispositif de pompage (24) pour pressuriser le liquide, ledit dispositif de pompage (24) comprenant un dispositif d'entraînement de pompe (26) qui est couplé en mouvement avec un piston de pompe (40) par une bielle de pompe (50), **caractérisé en ce que** la bielle présente une première partie de bielle (56) et une seconde partie de bielle (58), lesdites première et seconde parties de bielle (56, 58) étant reliées par au moins un dispositif de liaison (70) au moyen duquel les parties de bielle (56, 58) peuvent être enclipsées dans au moins deux plans d'enclipsage différents (86, 88).

2. Pulvérisateur (10) selon la revendication 1, **caractérisé en ce que** les plans d'enclipsage (86, 88) forment un angle entre eux.

3. Pulvérisateur (10) selon la revendication 1 ou la revendication 2, **caractérisé en ce que** le dispositif de liaison (70) présente un premier élément d'enclipsage (74) associé à un premier plan d'enclipsage (86) ainsi qu'un second élément d'enclipsage (76) associé à un second plan d'enclipsage (88).

4. Pulvérisateur (10) selon la revendication 3, **caractérisé en ce que** le premier élément d'enclipsage (74) et le second élément d'enclipsage (76) sont agencés sur la première partie de bielle (56).

5. Pulvérisateur (10) selon l'une des revendications précédentes, **caractérisé en ce que** le dispositif de liaison (70) présente une première surface d'enclipsage (80) associée au premier plan d'enclipsage (86) et une seconde surface d'enclipsage (82) associée au second plan d'enclipsage (88).

6. Pulvérisateur (10) selon la revendication 5, **caractérisé en ce que** la première surface d'enclipsage (80) et la seconde surface d'enclipsage (82) sont agencées sur la seconde partie de bielle (58).

7. Pulvérisateur (10) selon l'une des revendications précédentes, **caractérisé en ce que** les parties de bielle (56, 58) peuvent être assemblées dans une direction d'assemblage (60) et **en ce que** ladite direction d'assemblage (60) est perpendiculaire à un des plans d'enclipsage (86, 88).

8. Pulvérisateur (10) selon l'une des revendications 3 à 7, **caractérisé en ce que** le premier élément d'enclipsage (74) et le second élément d'enclipsage (76) sont agencés sur un support d'éléments d'enclipsage commun (72).

9. Pulvérisateur (10) selon la revendication 8, **caractérisé en ce que** le premier élément d'enclipsage (74) et le second élément d'enclipsage (76) dépassent du support d'éléments d'enclipsage (72) dans différentes directions.

10. Pulvérisateur (10) selon la revendication 8 ou la revendication 9, **caractérisé en ce que** le support d'éléments d'enclipsage (72) s'étend parallèlement à une direction d'assemblage (60) dans laquelle les parties de bielle (56, 58) peuvent être assemblées l'une à l'autre.

11. Pulvérisateur (10) selon l'une des revendications 8 à 10, **caractérisé en ce que** le support d'éléments d'encliquetage (72) peut se déformer dans une direction parallèle au premier plan d'enclipsage (86).

12. Pulvérisateur (10) selon l'une des revendications 3 à 11, **caractérisé en ce que** le second élément d'enclipsage (76) peut se déformer dans une direction parallèle au premier plan d'enclipsage (86).

13. Pulvérisateur (10) selon l'une des revendications 3 à 12, **caractérisé en ce que** pour déformer le second élément d'enclipsage (76), il est prévu, sur la seconde partie de bielle (58), une surface d'arrêt (90) qui est inclinée par rapport à une direction d'assemblage (60) dans laquelle les parties de bielle (56, 58) peuvent être assemblées entre elles.

14. Pulvérisateur (10) selon la revendication 13, **caractérisé en ce que** la surface d'arrêt (90) est agencée à proximité d'une seconde surface d'enclipsage (82) associée au second plan d'enclipsage (88).

15. Pulvérisateur (10) selon l'une des revendications précédentes, **caractérisé en ce que** lorsque les parties de bielle (56, 58) sont assemblées entre elles, un premier élément d'enclipsage (74) est enclipsé avec une première surface d'enclipsage (80) dans un premier plan d'enclipsage (86) et un second élément d'enclipsage (76) est enclipsé avec une seconde surface d'enclipsage (82) dans un second plan d'enclipsage (88), l'enclipsage entre le second élément d'enclipsage (76) et la seconde surface d'enclipsage (82) servant de dispositif de sécurité empêchant le premier élément d'enclipsage (74) de se désolidariser de la première surface d'enclipsage (80).

16. Bielle de pompe pour dispositif de pompage (24), avec une première partie de bielle (56) et une seconde partie de bielle (58), lesdites première et seconde parties de bielle (56, 58) étant reliées par au moins un dispositif de liaison (70) au moyen duquel les parties de bielle (56, 58) peuvent être enclipsées dans au moins deux plans d'enclipsage différents (86, 88).
